# EUROPÄISCHE PATENTANMELDUNG

(11) **EP 1 103 666 A2**
(43) Veröffentlichungstag der Anmeldung: **30.05.2001**
(21) Anmeldenummer: 00125215.4
(22) Anmeldetag: 22.11.2000
(51) Int. Cl.: E03F 5/14

(54) **Vorrichtung zum Entfernen von Rechengut aus einem durchströmten Gerinne**

(30) Priorität: 23.11.1999 DE 29920552 U
(71) Anmelder: Klasnic, Branko, D-81925 München (DE)
(72) Erfinder: Klasnic, Branko, D-81925 München (DE)
(74) Vertreter: HOFFMANN - EITLE

(57) **Zusammenfassung**

Eine Vorrichtung zum Entfernen von Rechengut (3) aus einem von einer Flüssigkeit durchströmten Gerinne (2) weist Folgendes auf:
- einen zumindest teilweise in die Flüssigkeit (2) ragenden, weitgehend scheiben- und trichterförmigen, feststehenden Siebkörper (11),
- eine zumindest teilweise aus der Flüssigkeit (2) ragende Fördereinrichtung (4) mit einem Eingabebereich (7) und einer oberhalb des Eingabebereichs (7) angeordneten Zuführung (13, 21) für das Rechengut (3) mit einer im Bereich des Siebkörpers (11) angeordneten Öffnung, wobei die Förderrichtung der Fördereinrichtung (4) eine entgegen die Strömungsrichtung gerichtete Komponente aufweist, und
- einen Abstreifer (12), der an einer zu der Flüssigkeitsströmung gerichteten Seite über den Siebkörper (11) sowie über die Öffnung der Zuführung (13, 21) bewegbar ist.

## Beschreibung

### Technisches Gebiet

Die vorliegende Erfindung betrifft eine Vorrichtung zum Entfernen von Rechengut aus einem von einer Flüssigkeit durchströmten Gerinne.

Insbesondere bei Kläranlagen ist es erforderlich, die zu der Kläranlage strömende Flüssigkeit vor der eigentlichen Klärung von größeren Verunreinigungen, beispielsweise durch Laub, Äste und dergleichen, zu reinigen. Dies geschieht durch eine geeignete Vorrichtung, die in einer, von der Flüssigkeit durchströmten Zulauf rinne angeordnet ist.

### Stand der Technik

Aus der DE 30 19 127 C2 ist eine derartige Vorrichtung bekannt, bei der ein zylindermantelförmig ausgebildeter Rost durch zahlreiche, hinsichtlich ihrer Blechebene parallel zueinander angeordnete kreisringförmige Elemente gebildet wird und geneigt in dem Gerinne angeordnet ist. In einem diskontinuierlichen Betrieb wird ein sogenannter Räumarm mit Räumgliedern über den Rost geführt, wodurch dafür gesorgt wird, dass das an dem Rost angesammelte Rechengut zu dem Einwurftrichter einer schräg aus dem Gerinne herausführenden Schneckenfördereinrichtung gelangt. Der Aufbau dieser Vorrichtung ist jedoch aufgrund des vergleichsweise großen, zylindermantelförmigen Rostes relativ hoch. Ferner kann diese Vorrichtung nur für einen vergleichsweise niedrigen Wasserstand verwendet werden, es kann nämlich der durchströmte, offene Zylinder nur soweit eingetaucht werden, dass seine unterste Mantellinie eingetaucht ist. Darüber hinaus ist für die Räumglieder eine komplizierte, kammartige Gestalt erforderlich, um das Rechengut von den hinsichtlich ihrer Blechebene parallel zueinander angeordneten kreisringförmigen Elementen abzuräumen.

Aus der DE 37 16 434 C1 ist ebenfalls eine Vorrichtung der beschriebenen Art bekannt, bei der der Rost in Form eines Abschnitts der Mantelfläche eines langgestreckten Zylinders ausgebildet ist, in dem sich ein Schneckenförderer befindet.

Eine ähnliche Anordnung ist aus der DE 42 13 847 A1 bekannt, wobei in diesem Fall der Rost sich verjüngend ausgebildet ist. Alternativ kann ein weitgehend trommelförmiger Rost vorgesehen sein, der drehbar gelagert ist, wodurch das Rechengut zu dem Trichter eines Schneckenförderers transportiert wird.

Das identische Prinzip kommt bei der DE 36 30 755 C2 zur Anwendung, wobei hier der umlaufend angetriebene Fangrost mit einer über dem Einwurftrichter ortsfest angeordneten Ablöseeinrichtung zusammenwirkt, um das Rechengut von dem Rost abzulösen und dieses in den Einwurftrichter fallen zu lassen.

Schließlich beschreibt die DE 43 20 678 C2 eine Vorrichtung mit drehbar gelagertem Siebkörper, bei dem Mitnehmerrippen für einen Transport zu einem Eingabebereich eines Schneckenförderers sorgen.

### Darstellung der Erfindung

Der Erfindung liegt die Aufgabe zugrunde, eine möglichst einfach aufgebaute und wirksame Vorrichtung zum Entfernen von Rechengut aus einem durchströmten Gerinne zu schaffen.

Die Lösung dieser Aufgabe erfolgt durch die Vorrichtung nach dem Anspruch 1.

Demzufolge ist bei der erfindungsgemäßen Vorrichtung zum Entfernen von Rechengut der Siebkörper weitgehend scheiben- oder trichterförmig ausgebildet und feststehend sowie geneigt in dem Gerinne angeordnet. Hierdurch ergibt sich zum einen für den Siebkörper selbst, der auch als Korb bezeichnet werden kann, ein vergleichsweise einfacher Aufbau.
Insbesondere kann der Siebkörper durch ringförmige Elemente, beispielsweise zahlreiche weitgehend konzentrisch zueinander angeordnete Flachstähle, aufgebaut werden. Dies stellt einen weniger aufwendigen Aufbau verglichen mit dem Stand der Technik dar, bei dem der Siebkörper aus kreisförmigen Elementen besteht, über die ein vergleichsweise kompliziert gestalteter Abstreifer geführt werden muss. Zum anderen ist im Gegensatz zu einigen bekannten Vorrichtungen kein Antrieb für den Siebkörper erforderlich. Vielmehr wird bei der neuartigen Vorrichtung ein Abstreifer angetrieben, der vergleichsweise klein und kompakt ausgebildet werden kann, so dass die erforderliche Antriebseinrichtung ebenfalls kompakt ausgeführt werden kann.

Ferner stellt sich der Siebkörper der erfindungsgemäßen Vorrichtung, der scheiben- oder trichterförmig gestaltet ist, gewissermaßen als rostartige, aber geschlossene Wand dar, während gemäß dem Stand der Technik, beispielsweise bei der DE 30 19 127 C2 ein offener, durchströmter Zylinder vorgesehen ist. Dies bietet für die erfindungsgemäße Vorrichtung den wesentlichen Vorteil, dass in dem Gerinne sehr hohe Wasserstände möglich sind. Insbesondere kann das Wasser bis zu dem höchsten Punkt des Siebkörpers aufgestaut werden. Bei der erwähnten bekannten Vorrichtung, bei der ein offener Zylinder durchströmt wird, ist dies nur bis zu einem Wasserstand möglich, bei dem nicht mehr als eine untere Mantellinie des Zylinders in das Wasser eingetaucht ist. Ein wesentlicher Anteil des Siebkörpers ragt jedoch aus dem Wasser heraus, so dass sich der Aufbau der erfindungsgemäßen Vorrichtung, bei welcher der gesamte Siebkörper in das Wasser eingetaucht und genutzt werden kann, als besonders effizient darstellt.

Ferner findet erfindungsgemäß die Förderung durch die Fördereinrichtung "gegen" die Strömungsrichtung statt, was dadurch ausgedrückt werden kann, dass die Fördereinrichtung eine Horizontalkomponente aufweist, die entgegengesetzt zu der Strömungsrichtung ist. Hierdurch können die Bauform der Fördereinrichtung und damit der gesamten Anlage verkürzt und die Bau- und Maschinenkosten verringert werden. Die Förderung entgegengesetzt zu der Strömungsrichtung in Kombination mit dem scheiben- oder trichterförmigen Aufbau des Siebkörpers bietet den Vorteil, dass sich die durchströmte Fläche vergrößert, wenn der Aufstellwinkel vergrößert wird. Mit anderen Worten kann im Gegensatz zu den herkömmlichen Sieben eine bessere Filterwirkung erreicht werden, wenn der Aufstellwinkel der Fördereinrichtung vergrößert wird, da sich hierdurch, wie erwähnt, auch die durchströmte Fläche vergrößert.

Der Abstreifer ist zum Abnehmen des Rechengutes nicht nur über den Siebkörper bewegbar, sondern auch über die Öffnung einer Zuführung, die oberhalb eines Eingabebereichs einer zumindest teilweise aus der Flüssigkeit ragenden Fördereinrichtung vorgesehen ist. Mit anderen Worten streift der Abstreifer das Rechengut von dem Siebkörper ab und bringt dieses zu der beschriebenen Zuführung. Dadurch, dass die Zuführung oberhalb des Eingabebereichs der Fördereinrichtung angeordnet ist, fällt oder rutscht das Rechengut aufgrund der Schwerkraftwirkung zu dem Eingabebereich und damit in die Fördereinrichtung, so dass es mittels der Fördereinrichtung, beispielsweise in Form eines Schneckenförderers, aus dem Gerinne herausgefördert und in einen geeigneten Behälter überführt werden kann. Hierbei bildet die Zuführung zu dem Eingabebereich der Fördereinrichtung im Gegensatz beispielsweise der Vorrichtung gemäß der DE 30 19 127 C2 einen geschlossenen Kanal, so dass das Rechengut zuverlässig zu der Fördereinrichtung geführt werden kann. Mit anderen Worten ist der Rechenrost des Siebkörpers unmittelbar mit der Öffnung der Zuführung verbunden, so dass der Abstreifer das Rechengut zuverlässig von dem Rechenrost abnimmt und in die Zuführung befördert.

Bevorzugte Weiterbildungen der Erfindung sind in den weiteren Ansprüchen beschrieben.

Der Siebkörper kann in vorteilhafter Weise besonders einfach gestaltet werden, wenn er durch zueinander in geeigneter Weise beabstandete, weitgehend ringförmige Elemente gebildet wird. Diese lassen sich mit geringerem Aufwand herstellen als die gemäß dem Stand der Technik teilweise verwendeten kreisringförmigen Elemente. Unter ringförmig wird in diesem Zusammenhang verstanden, dass die einzelnen Elemente in Achsrichtung konzentrisch zueinander angeordnet sind und sich einige Zentimeter in Achsrichtung, jedoch nicht in nennenswertem Ausmaß in radialer Richtung des scheiben- oder trichterförmig gestalteten Siebkörpers erstrecken. Da der Abstreifer sich über die Schmalseiten der ringförmigen Elemente, die weitgehend auf einer Geraden liegen, erstreckt, kann er äußerst einfach gestaltet werden.

Für den Siebkörper hat sich eine Form als besonders vorteilhaft herausgestellt, bei der dieser trichterförmig und sich in Strömungsrichtung verjüngend geformt ist, wobei die Zuführung zu der Fördereinrichtung in Form einer in dem Siebkörper ausgebildeten Mulde oder Rutsche vorgesehen ist.

Mit anderen Worten sind die üblicherweise ringförmig gestalteten Elemente des Siebkörpers an einer Stelle entlang ihres Umfangs unterbrochen, und an dieser Stelle ist in Form einer Vertiefung und flächig begrenzt eine Mulde oder Rutsche vorgesehen, in welche das von dem Siebkörper abgestreifte Flächengut fällt. Da diese Zuführung erfindungsgemäß oberhalb des Eingabebereichs der Fördereinrichtung vorgesehen ist, gelangt das Rechengut nachfolgend aufgrund der Schwerkraft zu der Fördereinrichtung und kann aus dem Gerinne herausgefördert werden.

Bei bestimmten Anwendungsfällen wird eine Ausführungsform der Erfindung bevorzugt, bei der der Siebkörper weitgehend scheibenförmig oder sich in Strömungsrichtung verbreiternd trichterförmig gestaltet ist. In diesem Fall wird die Zuführung zu dem Eingabebereich der Fördereinrichtung durch einen sich von dem Siebkörper zu dem Eingabebereich der Fördereinrichtung erstreckenden Trichter gebildet. Wie vorangehend in Zusammenhang mit der alternativen Ausführungsform erläutert, wird das von dem Siebkörper durch den Abstreifer abgeräumte Rechengut in einen Bereich oberhalb des als Zuführung wirkenden Trichters gebracht, so dass es in den Trichter fällt und zu dem Eingabebereich der Fördereinrichtung gelangt.

Das Abfangen und Heraussieben des Rechengutes kann über den gesamten Querschnitt des Gerinnes besonders wirkungsvoll durchgeführt werden, wenn der Siebkörper gemäß einer bevorzugten Ausführungsform entlang seines Umfangs zumindest teilweise eine als Rost ausgebildete Seitenwand aufweist. Insbesondere kann eine derartige Seitenwand in einem oberen Bereich ausgebildet sein, so dass in diesem Bereich, in dem sich die Anbringung von Leitblechen zum Leiten der Flüssigkeit zu dem Siebkörper wenig eignet, eine zuverlässige Reinigung der Flüssigkeit von dem Rechengut gewährleistet werden kann. Mittels dieses seitlich und insbesondere oberhalb von dem scheiben- oder trichterförmigen Siebkörper angeordneten, zusätzlichen Rostes kann erreicht werden, dass die erfindungsgemäße Vorrichtung für erheblich höhere Wasserstände geeignet ist. Insbesondere kann der zusätzliche Rost für einen erhöhten Wasserstand infolge von anfallendem Regenwasser ausgelegt sein und auch in einer derartigen Situation für eine zuverlässige Entfernung des Rechengutes sorgen. Beispielsweise kann hierbei die Spaltweite an dem zusätzlichen Rost erhöht sein, um den Verhältnissen bei einem infolge von Regen gestiegenen Wasserstand Rechnung zu tragen. Hierbei kann der weitere Abstreifer, der dem zusätzlichen Rost zugeordnet ist, mit dem ohnehin für den eigentlichen Siebkörper vorgesehenen Abstreifer sowie der Fördereinrichtung verbunden werden, so dass insgesamt nur ein Antrieb erforderlich ist.

Als besonders vorteilhaft wird in diesem Zusammenhang eine Ausführungsform angesehen, bei welcher der Siebkörper eine als Rost ausgebildete Seitenwand in Form eines Abschnitts eines Zylindermantels aufweist, dem ein weiterer Abstreifer zugeordnet ist. Dieser Abstreifer sorgt dafür, dass sich jegliches Rechengut, das sich an dem beschriebenen Rost sammelt, ebenfalls in die Zuführung zu dem Eingabebereich der Fördereinrichtung fällt. Vorzugsweise wird für die Seitenwand in Form eines Zylindermantelabschnitt ein Umfangswinkel von 180° vorgesehen.

### Kurze Beschreibung der Zeichnungen

Nachfolgend wird die Erfindung beispielhaft anhand von bevorzugten Ausführungsformen näher erläutert. Es zeigen:
- Fig. 1: eine Seitenansicht einer ersten Ausführungsform der Erfindung;
- Fig. 2: eine Ansicht des Siebkörpers und eines Teils der Fördereinrichtung der ersten Ausführungsform der Erfindung in Strömungsrichtung gesehen;
- Fig. 3: eine Draufsicht auf den Siebkörper der ersten Ausführungsform in Richtung der Achse der Fördereinrichtung gesehen;
- Fig. 4: eine Seitenansicht einer zweiten Ausführungsform der Erfindung;
- Fig. 5: eine Draufsicht auf den Siebkörper der zweiten Ausführungsform der Erfindung; und
- Fig. 6: eine Seitenansicht einer dritten Ausführungsform der Erfindung.

### Ausführliche Beschreibung bevorzugter Ausführungsformen der Erfindung

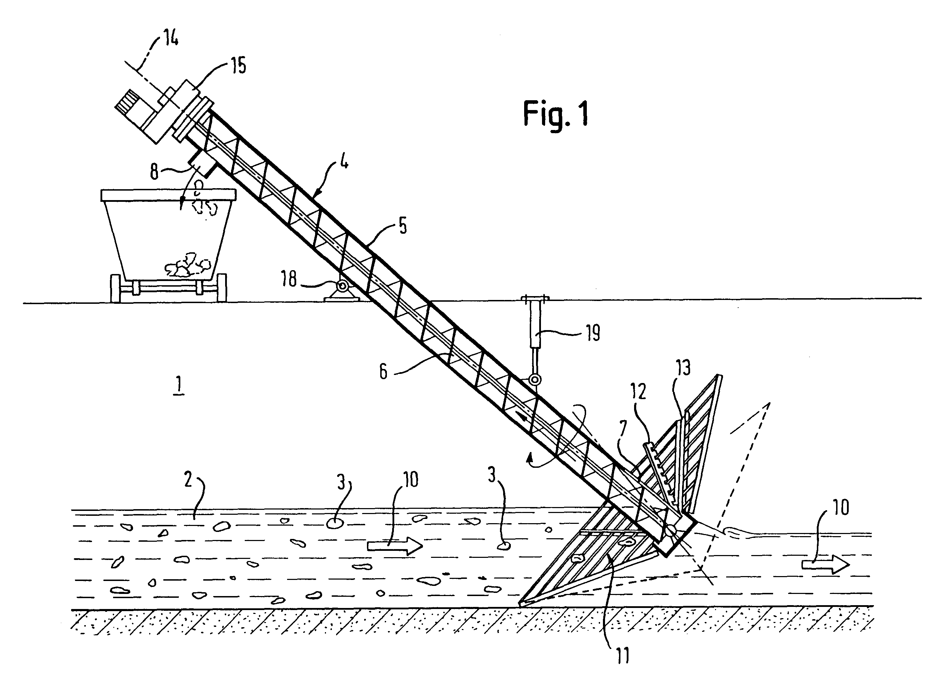

Wie Fig. 1 zeigt, ist die erfindungsgemäße Vorrichtung zum Entfernen von Rechengut in einem Gerinne 1 angeordnet. In dem Gerinne 1 strömt Flüssigkeit 2, die mit Rechengut 3 in Form von Feststoffen verschiedener Konsistenz und Größe verunreinigt ist. Die Vorrichtung ist in das Gerinne 1 eingeschwenkt, so dass der in diesem Fall in Strömungsrichtung 10 sich verjüngende Siebkörper 11 zumindest teilweise in das Wasser 2 eintaucht und mit seinem Rand gegen den Boden und die Wandungen des Gerinnes 1 weitgehend abschließt. Der Winkel zwischen der Achse 14 der Vorrichtung und der Horizontalen beträgt bei der dargestellten Ausführungsform etwa 40°. Über ein Querlager 18 kann die Vorrichtung mit Hilfe einer Hebe- und Verstelleinrichtung 19 aus dem Gerinne 2 herausgeschwenkt werden, so dass sie für Wartungs- und Reperaturzwecke zugänglich ist. Die Hebebühne-Verstelleinrichtung 19 dient ferner der Verstellung des Neigungswinkels der Achse 14. Alternativ ist jedoch auch eine feste Installation der Vorrichtung in dem Gerinne denkbar.

Der obere Teil der Vorrichtung besteht im Wesentlichen aus einer Fördereinrichtung 4, die in dem gezeigten Fall als Schneckenfördereinrichtung vorgesehen ist, die einen aufgesetzten Motor 15 aufweist, der eine Schnecke 6 antreibt, die in einem Gehäuse 5 umläuft. Das Gehäuse 5 der Schneckenfördereinrichtung 4 ist im Wesentlichen zylindermantelförmig oder trogförmig ausgebildet und besitzt an seinem oberen Ende eine Abwurfstelle 8 für das Rechengut 3. Das untere und zum Teil in den Wasserspiegel ragende Ende des Gehäuses 5 der Schneckenfördereinrichtung 4 verfügt über einen an der Oberseite angeordneten Eingabebereich 7. Die Schnecke 6 der Fördereinrichtung 4 kann über eine feste Steigung oder Schneckenabschnitte mit unterschiedlichen Steigungen verfügen, um Transport- und Kompressionseigenschaften verschiedenen Erfordernissen anzupassen.

Der Siebkörper 11 ist erfindungsgemäß feststehend in dem Gerinne 1 angebracht und besteht im Wesentlichen aus zahlreichen ringförmigen, voneinander um beispielsweise 3 bis 5 cm beabstandeten einzelnen Elementen, die durch entsprechend geformte Flachstähle gebildet werden können. An dem Ringkörper 11 sammelt sich das Rechengut 3, und wird nachfolgend von einem sich gewissermaßen an der Innenseite, das heißt in Strömungsrichtung vor dem Siebkörper 11, über diesen bewegenden Abstreifer 12 von dem Siebkörper 11 abgeräumt. In einem oberen Bereich des Siebkörpers 11 ist sich in radialer Richtung erstreckend eine Zuführung 13 vorgesehen, die in dem gezeigten Fall als Rutsche oder Mulde ausgebildet ist. In diese Mulde 13 wird jegliches Rechengut, das sich an dem Siebkörper 11 angesammelt hat, von dem Abstreifer 12, der es von den einzelnen ringförmigen Elementen des Siebkörpers 11 mitnimmt, hineingeschoben. Durch die Wirkung der Schwerkraft rutscht das Rechengut in der Mulde 13 nach unten, zu dem Eingabebereich 7 des Schneckenförderers 4, so dass das Rechengut durch den Schneckenförderer zu der Abwurfstelle abtransportiert werden kann. Es sei noch erwähnt, dass ergänzend eine (nicht dargestellte) Spritzvorrichtung vorgesehen sein kann, um den Siebkörper insbesondere in dem Bereich, der nicht in die Flüssigkeit 2 ragt, von Rechengut zu reinigen, das daran hängengeblieben ist.

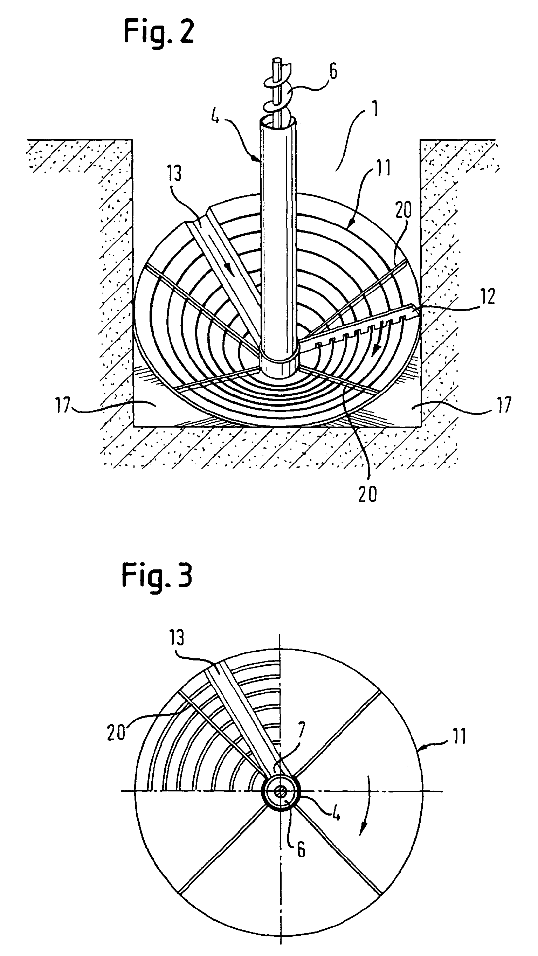

In Fig. 2 ist der Aufbau der ersten Ausführungsform der Erfindung in der Strömungsrichtung 10 gesehen zu erkennen. Die verbleibenden Lücken zwischen dem Siebkörper 11 und dem Boden sowie den Seitenwänden des Gerinnes 1 werden in geeigneter Weise durch Leitbleche 17 abgedeckt. Es sei erwähnt, dass entsprechend auch rechts und links oberhalb des Siebkörpers Leitbleche vorgesehen sein können, um ein Aufstauen des Wassers bis zu einem Wasserstand zu ermöglichen, der bis zu dem oberen Scheitelpunkt des Siebkörpers 11 reicht. Der erfindungsgemäße Siebkörper 11 ist hierfür grundsätzlich geeignet und müsste zu diesem Zweck nur mit den erwähnten zusätzlichen Leitblechen kombiniert werden, welche die am oberen Rand verbleibenden Lücken zu den Seitenwänden hin abdecken.

In Fig. 2 ist ergänzend der Aufbau des Siebkörpers 11 aus ringförmigen Einzelelementen, beispielsweise in Form von zueinander beabstandeten Flachstählen zu erkennen. Diese werden durch mehrere Stege 20 zusammengehalten. Über den Siebkörper 11 streicht der Abstreifer 12, um das durch den Siebkörper 11 festgehaltene Rechengut 3 zu der Mulde 13 zu bringen, die in diesem Fall etwa auf der 11-Uhr-Stellung des gezeigten Siebkörpers angeordnet ist. In dieser Mulde 13 rutscht das Rechengut zu der in Fig. 2 nicht zu erkennenden Eingabeöffnung des Schneckenförderers 4 und kann hierdurch aus dem Gerinne 1 heraustransportiert werden.

Die Eingabeöffnung ist in Fig. 3 zu erkennen, bei der es sich um eine Ansicht des Siebkörpers in Richtung der Achse des Schneckenförderers 4 handelt. Wie die Darstellung zeigt, mündet die Mulde 13 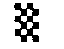 in diesem Fall tangential - in den Eingabebereich 7 des Schneckenförderers 4, so dass das Rechengut in den Wirkbereich der Schnecke 6 gelangt und zu der Abwurfstelle 8 gefördert werden kann.

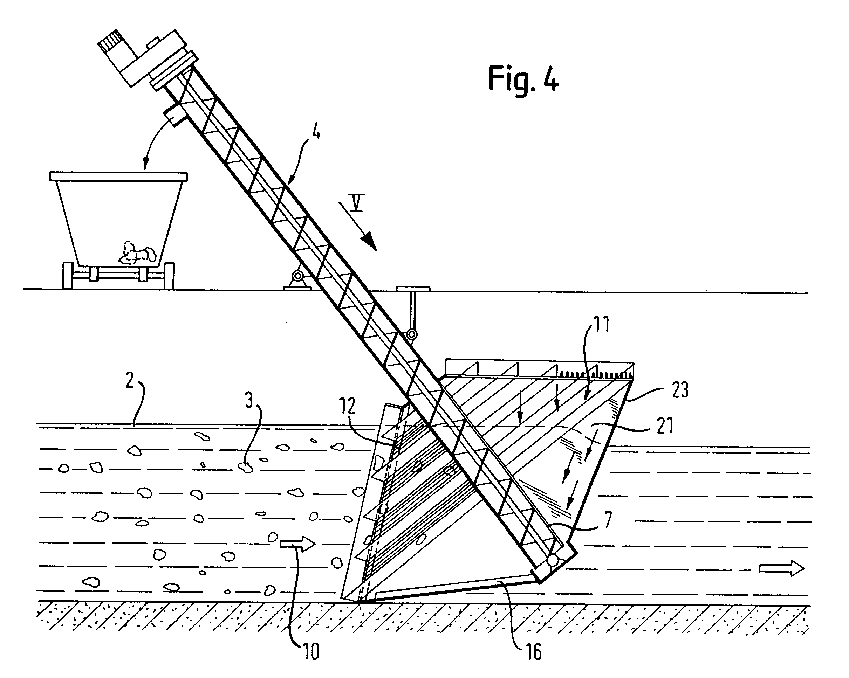

Bei der in Fig. 4 dargestellten zweiten Ausführungsform der Erfindung ist der Siebkörper 11 so gestaltet, dass er sich in Strömungsrichtung 10 verbreitert. Darüber hinaus ist der Öffnungswinkel des umgekehrten trichterförmig oder kegelstumpfförmig gestalteten Siebkörpers 11 ein wenig geringer als derjenige des Siebkörpers 11 der ersten Ausführungsform. Hierbei ist die Gesamtanordnung derart gestaltet, dass sich der zu der Strömung gerichtete Bereich des Siebkörpers 11 ein wenig (gemäß Fig. 4) nach rechts, d.h. in Strömungsrichtung neigt, so dass keine Gefahr besteht, dass das angesammelte Rechengut an dem Siebkörper 11 nach unten fällt und nicht mehr entfernt werden kann.

Das Rechengut 3 bleibt vielmehr zuverlässig außen an demjenigen Teil des Siebkörpers 11 hängen, der sich in die Flüssigkeit 2 erstreckt. An dieser Außenseite ist auch bei der Ausführungsform von Fig. 2 ein auf dem Siebkörper 11 umlaufender Abstreifer 12 vorgesehen, der das Rechengut zu einem Trichter 21 befördert, der im oberen Bereich des Siebkörpers 11 vorgesehen ist. Im unteren Bereich desselben ist hierbei eine Halterung 16 zu erkennen, die der Bewegung des Abstreifers über den Siebkörper 11 dient. Da das Rechengut über die Länge einer vollständigen Mantellinie in den Trichter 21 fallen kann, ist der Eingabebereich 7 des Schneckenförderers 4 bei dieser Ausführungsform derart gestaltet, dass er sich im Wesentlichen von dem unteren Ende des Schneckenförderers 4 bis zu derjenigen Stelle erstreckt, an welcher der Schneckenförderer 4 gewissermaßen durch den kegelstumpfförmigen Siebkörper 11 tritt.

An den Eingabebereich 7 schließen sich nach oben hin bis zu dem Siebkörper 11 zwei im Wesentlichen zu der Zeichenebene parallele Seitenwände 22 an. Nach hinten wird der Trichter durch eine Rückwand 23 begrenzt. Die ringförmigen Einzelelemente des Siebkörpers 11 sind an der oberen Öffnung des Trichters 21 unterbrochen, so dass das Rechengut, das durch den Abstreifer entlang der ringförmigen Einzelelemente des Siebkörpers 11 zu dem Bereich oberhalb des Trichters 21 transportiert wird, in diesen fallen kann. Von dem Trichter 21 wird es zu der Eingabeöffnug 7 geleitet, so dass es durch den Schneckenförderer 4 zu dem Bereich außerhalb des Gerinnes 2 gebracht werden kann. Auch bei dieser Ausführungsform kann ergänzend, in diesem Fall in einem Bereich oberhalb des Trichters 21, eine Spritzeinrichtung vorgesehen sein, die gegebenenfalls schwenkbar ist, beispielsweise um auch die Seitenwände des Trichters 21 zu reinigen.

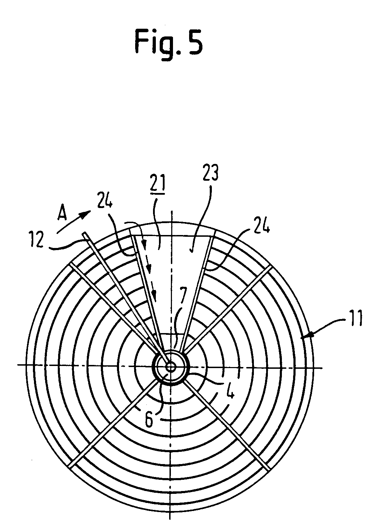

Wie in der Ansicht von Fig. 5, die die Vorrichtung in Richtung der Achse des Schneckenförderers 4 gesehen zeigt, zu erkennen ist, erstrecken sich die Seitenwände 24 des Trichters 21 senkrecht zu der Zeichenebene von Fig. 5 und somit entlang der Achse des kegelstumpfförmigen Siebkörpers 11. Bei der Betrachtungsweise von Fig. 5 schaut man gewissermaßen unmittelbar auf die Rückwand 23 des Trichters 21, die den Trichter nach hinten hin begrenzt. Wie durch die Pfeile angedeutet wird, streift der sich in Richtung des Pfeiles A drehende Abstreifer das Rechengut von den einzelnen ringförmigen Elementen des Siebkörpers 11 zu dem Bereich oberhalb des Trichters 21, so dass das Rechengut in diesen hineinfällt und über den Eingabebereich 7 in den Wirkbereich der Schnecke 6 des Schneckenförderers 4 gelangt, so dass es aus dem Gerinne heraustransportiert werden kann.

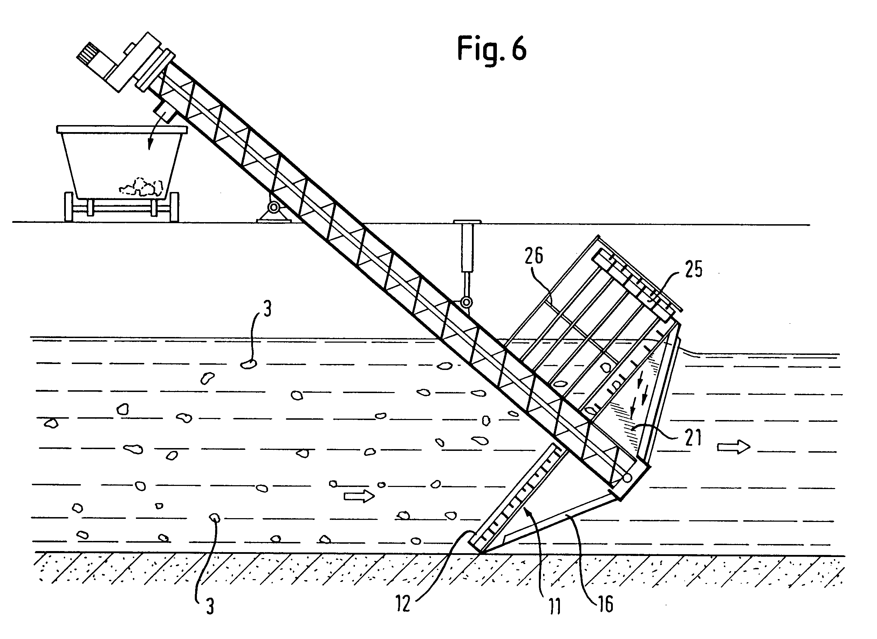

Bei der in Fig. 6 gezeigten Ausführungsform ist der Trichter 21 im Wesentlichen ähnlich zu demjenigen der vorangehend beschriebenen zweiten Ausführungsform gestaltet. Es sind lediglich die Seitenwände hinsichtlich ihrer Form an die Form des Siebkörpers 11 angepaßt, bei dem es sich um einen weitgehend ebenen, scheibenförmigen Siebkörper handelt. Dieser wird, wie die vorangehend beschriebenen Ausführungsformen, durch zahlreiche ringförmige Elemente in Form von in geeigneter Weise ausgebildeten Flacheisen gebildet. Um das darin gesammelte Rechengut 3 zu dem Bereich oberhalb des Trichters zu fördern, ist auch bei dieser Ausführungsform der Vorrichtung mit einem feststehenden Siebkörper 11 ein Abstreifer 12 vorgesehen.

Bei der Ausführungsform in Fig. 6 wirkt dieser zusammen mit einem weiteren Abstreifer 25, der innen an einer an den Siebkörper 11 anschließenden Seitenwand 26 umläuft. Die Seitenwand oder Halbschale ist bei dem gezeigten Ausführungsbeispiel als Abschnitt einer Zylindermantelfläche gestaltet und als Rost ausgebildet, so dass sich daran in Zusammenwirkung mit dem eigentlichen Siebkörper 11 Rechengut verfängt. Dieses wird durch den ergänzenden Abstreifer 25 derart in einen oberen Bereich der Seitenwand 26 transportiert, wo diese eine als Vertiefung in der Innenfläche des Seitenrostes 26 ausgebildete Zuführung aufweist. Insbesondere wenn sich der Wasserstand bis zu dem oberen Ende des Seitenrostes 26 erstreckt, wofür die erfindungsgemäße Vorrichtung grundsätzlich geeignet ist, bewirkt hierbei die Flüssigkeitsströmung, dass das Rechengut in der Zuführung des Seitenrostes 26 zu der oberen Öffnung des Trichters 21 und von dort in den Eingabebereich des Schneckenförderers 4 gelangt. Sollte der Wasserstand nicht so hoch sein, kann das Rechengut von dem oberen Bereich dieses Seitenrostes 26 in den Trichter fallen. Auch bei dieser Ausführungsform kann eine ergänzend vorgesehene Spritzeinrichtung für die Unterstützung der Reinigung der Seitenwand 26 sorgen.

## Patentansprüche

1. Vorrichtung zum Entfernen von Rechengut (3) aus einem von einer Flüssigkeit durchströmten Gerinne (2), mit:
- einem zumindest teilweise in die Flüssigkeit (2) ragenden, weitgehend scheiben- und trichterförmigen, feststehenden Siebkörper (11),
- einer zumindest teilweise aus der Flüssigkeit (2) ragenden Fördereinrichtung (4) mit einem Eingabebereich (7) und einer oberhalb des Eingabebereichs (7) angeordneten Zuführung (13, 21) für das Rechengut (3) mit einer im Bereich des Siebkörpers (11) angeordneten Öffnung, wobei die Förderrichtung der Fördereinrichtung (4) eine entgegen die Strömungsrichtung gerichtete Komponente aufweist, und
- einem Abstreifer (12), der an einer zu der Flüssigkeitsströmung gerichteten Seite über den Siebkörper (11) sowie über die Öffnung der Zuführung (13, 21) bewegbar ist.

2. Vorrichtung nach Anspruch 1, **dadurch gekennzeichnet, dass** der Siebkörper (11) durch zueinander beabstandete, weitgehend ringförmige Elemente, insbesondere Flachstähle, gebildet wird.

3. Vorrichtung nach Anspruch 1 oder 2, **dadurch gekennzeichnet, dass** die Körper (11) trichterförmig und sich in Strömungsrichtung (10) verjüngend gestaltet ist, und dass die Zuführung in Form einer in dem Siebkörper ausgebildeten Mulde oder Rutsche (13) vorgesehen ist.

4. Vorrichtung nach Anspruch 1 oder 2, **dadurch gekennzeichnet, dass** die Körper (11) scheiben- oder sich in Strömungsrichtung verbreiternd trichterförmig gestaltet ist, und dass die Zuführung in Form eines sich von dem Siebkörper (11) zu dem Eingabebereich (7) der Fördereinrichtung (4) erstreckenden Trichters (21) vorgesehen ist.

5. Vorrichtung nach Anspruch 1, **dadurch gekennzeichnet, dass** der Siebkörper entlang seines Umfangs zumindest abschnittsweise, insbesondere in einem oberen Bereich eine als Rost ausgebildete Seitenwand (26) aufweist, der ein weiterer Abstreifer (25) zugeordnet ist.

6. Vorrichtung nach Anspruch 5, **dadurch gekennzeichnet, dass** die Seitenwand in Form eines Zylindermantelabschnitts, vorzugsweise mit einem Umfangswinkel von 180°, ausgebildet ist.
